# EUROPÄISCHE PATENTSCHRIFT

(11) **EP 3 741 584 B1**
(45) Veröffentlichungstag und Bekanntmachung des Hinweises auf die Patenterteilung: **06.04.2022**
(21) Anmeldenummer: 20159224.3
(22) Anmeldetag: 25.02.2020
(51) Int. Cl.: B60C 11/16

(54) **SPIKE**
SPIKE
CRAMPON

(30) Priorität: 10.04.2019 DE 102019205108
(43) Veröffentlichungstag der Anmeldung: 25.11.2020
(73) Patentinhaber: Continental Reifen Deutschland GmbH, 30165 Hannover (DE)
(72) Erfinder: Schlittenhard, Jan, 30419 Hannover (DE); Bosse, Stefan, 30419 Hannover (DE); Henze, Eugen, 30419 Hannover (DE)
(74) Vertreter: Continental Corporation

(56) Entgegenhaltungen:
- DE-A1-102011 000 563
- JP-A- H0 338 414
- KR-A- 20190 008 694

## Beschreibung

Die Erfindung betrifft einen Spike zum Verankern in einem Spikeloch eines Laufstreifens eines Fahrzeugluftreifens mit einem im Spikeloch gehaltenen rotationssymmetrisch gestalteten Spikekörper und einem im Spikekörper eingesetzten und verankerten Spikepin, wobei der Spikekörper aus einem Oberflansch, einem Fußflansch und einer zwischen dem Oberflansch und dem Fußflansch befindlichen Einschnürung besteht.

Spikes werden üblicherweise durch eine Kombination aus Formschluss und Klemmung in den Spikelöchern des Laufstreifens von Fahrzeugluftreifen gehalten. Herkömmliche bzw. übliche Spikes besitzen einen Spikekörper aus Aluminium, Stahl oder Kunststoff, in welchem der über die Laufstreifenoberfläche hervorstehende Spikepin, der aus Hartmetall besteht, gehalten ist.

Ein Spike eingangs genannter Art ist beispielsweise aus der DE 2 322 357 A1 bekannt. Dieser bekannte Spike weist einen Spikekörper aus Kunststoff auf, der Fußflansch des Spikekörpers besitzt einen Außendurchmesser, welcher dem Außendurchmesser des Oberflansches entspricht. Zwischen dem Oberflansch und dem Fußflansch befindet sich eine nutartige Einschnürung, welche in Richtung Fußflansch als sich verjüngender Kegelstumpf ausgeführt ist, der über eine Übergangsrundung in den Fußflansch übergeht. Die Gummiüberdeckungsfläche auf dem Fußflansch ist gering, sodass die Haltekraft des Spikes im Gummimaterial des Laufstreifens nicht optimal ist.

Aus der DE 10 2011 000 563 A1 ist ein Spike bekannt, bei welchem zwischen dem Oberflansch und dem Fußflansch ein taillierter Mittelteil vorhanden ist, welcher eine doppelt-konusähnliche Außenkontur aufweist. Der taillierte Mittelteil erstreckt sich über eine Höhe, die im Wesentlichen der Höhe des Oberflansches entspricht. Der Fußflansch des Spikes weist einen deutlich größeren Außendurchmesser auf als der Oberflansch.

Aus der JPH0338414 ist ein gattungsbildender Spike bekannt, der zwischen Ober- und Unterflansch eine Einschnürung mit umlaufend konkav gewölbter Außenfläche zeigt.

Ein weiterer Spike mit einer Einschnürung zwischen Ober- und Unterflansch ist in der KR20190008694 offenbart.

Bei den meisten bekannten Ausführungen von Spikes hat der Fußflansch für eine ausreichende Gummiüberdeckung zu sorgen, um eine gute Verankerung des Spikes im Gummimaterial des Laufstreifens zu gewährleisten. Der Fußflansch hat daher ein vergleichsweise großes Gewicht, welches das Gesamtgewicht des Spikes maßgeblich mitbestimmt und welches eine höhere Vertikalkraft bewirkt. Einer der Faktoren, die für den von Spikes verursachten Straßenverschleiß von Bedeutung sind, ist bekannter Weise das Gewicht der Spikes, da der Straßenverschleiß und die damit einhergehende Feinstaubbildung hauptsächlich durch die Aufschlagenergie der Spikes verursacht wird. Der Erfindung liegt die Aufgabe zugrunde, einen Spike der eingangs genannten Art derart auszugestalten, dass eine gute Einbettung des Spikes im Gummimaterial des Laufstreifens sichergestellt ist, wobei jedoch der Fußflansch kleinvolumig und mit geringem Gewicht ausführbar sein soll, um das Gewicht des Spikes und dadurch den Straßenverschleiß gering zu halten.

Gelöst wird die gestellte Aufgabe erfindungsgemäß dadurch, dass die Einschnürung eine Höhe aufweist, die 23 % bis 35 % der Höhe des Spikekörpers beträgt, von einer insgesamt konkav gewölbten Außenfläche umlaufen und begrenzt ist sowie in ihrer Mitte ihren geringsten Außendurchmesser aufweist, welcher 3,0 mm bis 4,2 mm beträgt.

Die zwischen dem Fußflansch und dem Oberflansch vorgesehene Einschnürung ist daher derart ausgeführt, dass sie eine relativ große Gummikontaktfläche oberhalb des Fußflansches zur Verfügung stellt, die durch ihre konkave Wölbung gemeinsam mit dem Fußflansch für eine gute Einbettung des Spikes im Gummimaterial des Laufstreifens sorgt. Dadurch kann der Fußflansch kleinvolumiger und mit geringerem Gewicht ausgeführt werden. Durch die durch die erfindungsgemäße Ausgestaltung des Spikes reduzierte Spikevertikalkraft verringert sich der Straßenverschleiß gegenüber den üblichen Spikeausführungen. Der kleinvolumigere Fußflansch bedingt zudem eine Materialeinsparung mit damit eine Kostenersparnis.

Weitere, besonders vorteilhafte und bevorzugte Ausgestaltungen der Einschnürung sorgen für eine gute Einbettung des Spikes im Gummimaterial des Laufstreifens. So ist es beispielsweise vorteilhaft, wenn der Außendurchmesser der Einschnürung in ihrer Mitte bis zu 4,0 mm, insbesondere 3,2 mm bis 3,8 mm, beträgt. Des Weiteren ist es in diesem Zusammenhang von Vorteil, wenn die Höhe der Einschnürung mindestens 25 % und bevorzugt mindestens 27 % der Höhe des Spikekörpers beträgt.

Eine weitere Maßnahme, welche eine gute Einbettung des Spikes begünstigt, besteht darin, dass die konkav gewölbte Außenfläche der Einschnürung zumindest Großteils einem Kreisbogen mit einem konstanten Radius von 1,0 mm bis 1,7 mm folgt, wobei der Kreisbogen höchstens ein Halbkreis ist.

Der Fußflansch des Spikes wird bevorzugt derart ausgeführt, dass er einen Außendurchmesser aufweist, welcher zumindest dem Außendurchmesser des Oberflansches entspricht und bis zu 2,2 mm größer ist als der Außendurchmesser des Oberflansches.

Bei einer weiteren, eine gute Einbettung des Spikes begünstigenden Maßnahme ist vorgesehen, dass der Oberflansch an seinem unteren Ende eine kreisringförmig umlaufende Verbreiterung aufweist, die eine konstante Dicke von 0,25 mm bis 0,5 mm und vorzugsweise einen Außendurchmesser aufweist, welcher insbesondere um 0,4 mm bis 0,6 mm größer ist als der Außendurchmesser des Oberflansches. Darüber hinaus ist es in diesem Zusammenhang auch von Vorteil, wenn die Einschnürung gegenüber dem Oberflansch und/oder dem Fußflansch nach innen versetzt ist, wobei der Versatz der Einschnürung gegenüber dem Oberflansch und/oder dem Fußflansch vorzugsweise 0,1 mm bis 0,4 mm beträgt.

Die Erfindung betrifft ferner einen Fahrzeugluftreifen mit einem Laufstreifen, in welchem Spikes, welche gemäß der Erfindung ausgeführt sind, eingesetzt sind.

Weitere Merkmale, Vorteile und Einzelheiten der Erfindung werden nun anhand der schematischen Zeichnung, die Ausführungsbeispiele eines erfindungsgemäßen Spikes darstellt, näher beschrieben. Dabei zeigen
- Fig. 1: eine Seitenansicht einer Ausführung eines Spikes,
- Fig. 2: eine Draufsicht auf den Spike gemäß Fig. 1 und
- Fig. 3: eine Seitenansicht einer weiteren Ausführung eines Spikes

Gemäß der Erfindung ausgeführte Spikes sind Spikes für Fahrzeugluftreifen, die für den Straßenverkehr zugelassen sind, insbesondere Reifen für Personenkraftwagen, Vans oder Light-Trucks. Die Spikes sind insbesondere für ein nachträgliches Einsetzen in den Laufstreifen der Fahrzeugluftreifen vorgesehen.

In der Beschreibung und in den Figuren beziehen sich Höhenabmessungen auf die Einbaurichtung des Spikes, Breitenabmessungen sind Abmessungen quer zur Einbaurichtung, oben ist dort, wo der Spikepin übersteht. Die Abmessungen sind Außenabmessungen des fertigen, einsatzbereiten Spikes, welche eine Toleranz von höchstens ± 0,25 mm, insbesondere von bis zu ± 0,1 mm aufweisen.

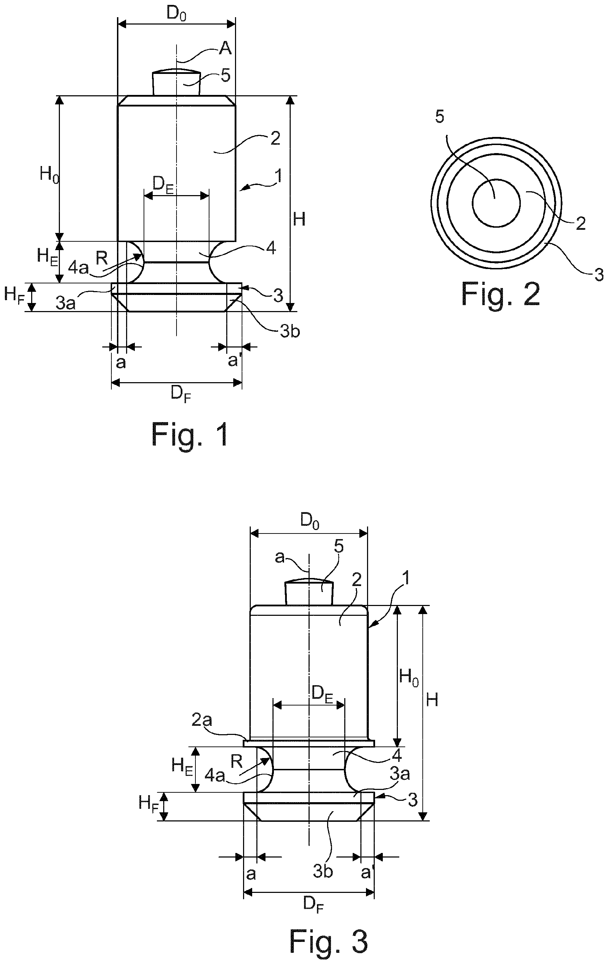

Der in Fig. 1 und 3 gezeigte Spike ist rotationssymmetrisch (Fig. 2) mit einer Hauptachse A ausgeführt und weist einen Spikekörper 1 mit einem Oberflansch 2, einem Fußflansch 3 und einer zwischen Oberflansch 2 und Fußflansch 3 befindlichen Einschnürung 4 auf. Im Spikekörper 1, insbesondere innerhalb des Oberflansches 2, ist ein Spikepin 5 aus einem Hartmetall eingesetzt und fest verankert, welcher in bekannter Weise mit seinem oberen Endabschnitt über den Oberflansch 2 vorsteht.

Der Spikekörper 1 besteht vorzugsweise aus Stahl, kann jedoch auch aus Aluminium, aus Gummi oder einem thermoplastischen Vulkanisat, bestehen, er kann auch eine Kombination der erwähnten Materialien aufweisen. Der Spikekörper kann, insbesondere wenn er aus einem metallischen Material besteht, zumindest zum Teil mit einer Schicht aus Gummi und/oder aus einem thermoplastischen Vulkanisat umhüllt sein.

Der Spikekörper 1 weist eine Höhe H auf, die insbesondere 8,0 mm bis 12,0 mm beträgt. Der Oberflansch 2 ist im Wesentlichen ein zylindrischer Bauteil mit einer Höhe Hₒ von 55 % bis 75 %, insbesondere bis zu 65 %, der Höhe H des Spikekörpers 1. Der Oberflansch 2 weist ferner einen Außendurchmesser Dₒ auf, welcher 5,3 mm bis 6,3 mm beträgt. Der Fußflansch 3 besitzt eine Höhe H_{F} von 1,2 mm bis 1,6 mm, insbesondere in der Größenordnung von 1,3 mm bis 1,5 mm, und einen Außendurchmesser D_{F} welcher zumindest dem Außendurchmesser Dₒ des Oberflansches 2 entspricht und bis zu 2,2 mm, größer ist als der Außendurchmesser Dₒ des Oberflansches. An die Einschnürung 4 anschließend weist der Fußflansch 3 über ein Drittel bis zur Hälfte seiner Höhe H_{F} einen schmalen, scheibenförmig-zylindrischen Oberteil 3a auf, der verbleibende Teil des Fußflansches 3 ist ein Unterteil 3b, der konisch mit geringer werdendem Außendurchmesser gestaltet ist. Der die konische Ausgestaltung bestimmende Winkel α zur zentralen Achse a des Spikes beträgt in der Größenordnung von 45°.

Die in Fig. 3 gezeigte Ausführung unterscheidet sich von jener gemäß Fig. 1 darin, dass der Oberflansch 2 an seinem unteren Ende eine kreisringförmig umlaufende Verbreiterung 2a aufweist, die eine konstante Dicke von 0,25 mm bis 0,5 mm und vorzugsweise einen Außendurchmesser aufweist, welcher insbesondere um 0,4 mm bis 0,6 mm größer ist als der Außendurchmesser Dₒ des Oberflansches 2.

Die Einschnürung 4 ist von einer vorzugsweise insgesamt konkav gebogenen Außenfläche 4a umlaufen und begrenzt, derart, dass die Einschnürung 4 in ihrer Mitte ihre schmalste Stelle und daher ihren geringsten Außendurchmesser D_{E} aufweist, welcher 3,0 mm bis 4,2 mm, vorzugsweise bis 4,0 mm und insbesondere 3,2 mm bis 3,8 mm, beträgt. Die konkave Rundung der Außenfläche 4a folgt Großteils einem Kreisbogen mit einem konstanten Radius R von 1,0 mm bis 1,7 mm, wobei gemäß einer bevorzugten Ausführung der Kreisbogen im Wesentlichen ein Halbkreis ist. Insbesondere am Übergang der konkaven Rundung zur Verbreiterung 2a kann die Rundung einen kleineren Radius aufweisen als in ihrem sonstigen Bereich. Die Einschnürung 4 weist ferner eine Höhe H_{E} auf, die 23 % bis 35 %, insbesondere mindestens 25 % und bevorzugt mindestens 27% der Höhe H des Spikekörpers 1 beträgt.

Bei den in Fig. 1 und Fig. 3 gezeigten Ausführungen ist die Einschnürung 4 sowohl gegenüber der unteren Begrenzungsfläche des Oberflansches 2 (Fig. 1) bzw. jener der Verbreiterung 2a (Fig. 3) des Oberflansches 2 als auch gegenüber der oberen Begrenzungsfläche des Fußflansches 3 nach innen versetzt, sodass am Oberflansch 2 bis zum Beginn der Einschnürung ein Versatz a von 0,1 mm bis 0,4 mm, am Fußflansch 3 ein Versatz a' vorliegt, welcher ebenfalls 0,1 mm bis 0,4 mm beträgt, wobei bei Ausführungen, bei welchen der Fußflansch 3 einen größeren Außendurchmesser aufweist als der Oberflansch 2, der Versatz a' etwas größer sein kann als der Versatz a.

Der Spike gemäß der Erfindung weist eine hohe Biegesteifigkeit auf und lässt sich auf besonders haltbare und zuverlässige Weise in einem Spikeloch des Laufstreifens eines Fahrzeugluftreifens verankern, da die Anordnung und Ausführung der Einschnürung 4 oberhalb des Fußflansches 3 und auf dem Fußflansch 3 eine Gummiüberdeckungsfläche zur Verfügung stellt, deren Größe und Ausgestaltung dem Spike ein gute Halterung im Gummimaterial des Laufstreifens sicherstellt. Die besondere Ausgestaltung und Anordnung der Einschnürung 4 gestattet es ferner, den Fußflansch kleinvolumig mit vergleichsweise kleinem Außendurchmesser und geringer Höhe auszuführen. Diese Maßnahmen sparen Material und damit Gewicht.

### Bezugszeichenliste

- 1: Spikekörper
- 2: Oberflansch
- 2a: Verbreiterung
- 3: Fußflansch
- 3a: Oberteil
- 3b: Unterteil
- 4: Einschnürung
- 4a: Außenfläche
- 5: Spikepin
- A: Achse
- α: Winkel
- D_{E}: Außendurchmesser Einschnürung
- D_{F}: Außendurchmesser Fußflansch
- Dₒ: Außendurchmesser Oberflansch
- H: Höhe Spikekörper
- H_{E}: Höhe Einschnürung
- H_{F}: Höhe Fußflansch
- Hₒ: Höhe Oberflansch
- R: Radius
- a, a': Versatz

## Patentansprüche

1. Spike zum Verankern in einem Spikeloch eines Laufstreifens eines Fahrzeugluftreifens mit einem im Spikeloch gehaltenen rotationssymmetrisch gestalteten Spikekörper (1) und einem im Spikekörper (1) eingesetzten und verankerten Spikepin (5), wobei der Spikekörper (1) aus einem Oberflansch (2), einem Fußflansch (3) und einer zwischen dem Oberflansch (2) und dem Fußflansch (3) befindlichen Einschnürung (4) besteht, die insgesamt von einer konkav gewölbten Außenfläche (4a) umlaufen und begrenzt ist,
**dadurch gekennzeichnet,**
**dass** die Einschnürung (4) eine Höhe (H_{E}) aufweist, die 23 % bis 35 % der Höhe (H) des Spikekörpers (1) beträgt, sowie in ihrer Mitte ihren geringsten Außendurchmesser (D_{E}) aufweist, welcher 3,0 mm bis 4,2 mm beträgt.

2. Spike nach Anspruch 1, **dadurch gekennzeichnet, dass** der Außendurchmesser (D_{E}) der Einschnürung (4) in ihrer Mitte bis zu 4,0 mm, insbesondere 3,2 mm bis 3,8 mm, beträgt.

3. Spike nach Anspruch 1, **dadurch gekennzeichnet, dass** die Höhe (H_{E}) der Einschnürung mindestens 25 % und bevorzugt mindestens 27% der Höhe (H) des Spikekörpers (1) beträgt.

4. Spike nach einem der Ansprüche 1 bis 3, **dadurch gekennzeichnet, dass** die konkav gewölbte Außenfläche der Einschnürung (4) zumindest Großteils einem Kreisbogen mit einem konstanten Radius (R) von 1,0 mm bis 1,7 mm folgt, wobei der Kreisbogen höchsten ein Halbkreis ist.

5. Spike nach einem der Ansprüche 1 bis 4, **dadurch gekennzeichnet, dass** der Fußflansch (3) einen Außendurchmesser (D_{F}) aufweist, welcher zumindest dem Außendurchmesser (Dₒ) des Oberflansches (2) entspricht und bis zu 2,2 mm größer ist als der Außendurchmesser (Dₒ) des Oberflansches (2).

6. Spike nach einem der Ansprüche 1 bis 5, **dadurch gekennzeichnet, dass** der Oberflansch (2) an seinem unteren Ende eine kreisringförmig umlaufende Verbreiterung (2a) aufweist, die eine konstante Dicke von 0,25 mm bis 0,5 mm und vorzugsweise einen Außendurchmesser aufweist, welcher insbesondere um 0,4 mm bis 0,6 mm größer ist als der Außendurchmesser (Do) des Oberflansches (2).

7. Spike nach einem der Ansprüche 1 bis 6, **dadurch gekennzeichnet, dass** die Einschnürung (4) gegenüber dem Oberflansch (2) und/oder dem Fußflansch (3) nach innen versetzt ist.

8. Spike nach Anspruch 7, **dadurch gekennzeichnet, dass** der Versatz (a, a') der Einschnürung (4) gegenüber dem Oberflansch (2) und/oder dem Fußflansch (3) 0,1 mm bis 0,4 mm beträgt.

9. Fahrzeugluftreifen mit einem Laufstreifen, **dadurch gekennzeichnet, dass** im Laufstreifen Spikes, welche gemäß einem oder mehreren der Ansprüche 1 bis 8 ausgestaltet sind, eingesetzt sind.

## Claims

1. Spike for anchoring in a spike hole of a tread of a pneumatic vehicle tyre, with a rotationally symmetrically designed spike body (1), held in the spike hole, and a spike pin (5), inserted and anchored in the spike body (1), the spike body (1) consisting of an upper flange (2), a lower flange (3) and a constriction (4), which is located between the upper flange (2) and the lower flange (3) and is surrounded and delimited overall by a concavely curved outer surface (4a),
**characterized**
**in that** the constriction (4) has a height (H_{E}) which is 23% to 35% of the height (H) of the spike body (1),
and in its middle has its smallest
outer diameter (D_{E}) , which is 3.0 mm to 4.2 mm.

2. Spike according to Claim 1, **characterized in that** the outer diameter (D_{E}) of the constriction (4) in its middle is up to 4.0 mm, in particular 3.2 mm to 3.8 mm.

3. Spike according to Claim 1, **characterized in that** the height (H_{E}) of the constriction is at least 25% and preferably at least 27% of the height (H) of the spike body (1).

4. Spike according to one of Claims 1 to 3, **characterized in that** the concavely curved outer surface of the constriction (4) at least for the most part follows an arc of a circle with a constant radius (R) of 1.0 mm to 1.7 mm, the arc being at most a semicircle.

5. Spike according to one of Claims 1 to 4, **characterized in that** the lower flange (3) has an outer diameter (D_{F}) which corresponds at least to the outer diameter (Dₒ) of the upper flange (2) and is up to 2.2 mm greater than the outer diameter (Dₒ) of the upper flange (2) .

6. Spike according to one of Claims 1 to 5, **characterized in that** the upper flange (2) has at is lower end a widening (2a), which runs around in the form of a circular ring and has a constant thickness of 0.25 mm to 0.5 mm and preferably an outer diameter which is in particular greater by 0.4 mm to 0.6 mm than the outer diameter (Dₒ) of the upper flange (2).

7. Spike according to one of Claims 1 to 6, **characterized in that** the constriction (4) is offset inwards with respect to the upper flange (2) and/or the lower flange (3).

8. Spike according to Claim 7, **characterized in that** the offset (a, a') of the constriction (4) with respect to the upper flange (2) and/or the lower flange (3) is 0.1 mm to 0.4 mm.

9. Pneumatic vehicle tyre with a tread, **characterized in that** spikes designed according to one or more of Claims 1 to 8 are inserted in the tread.

## Revendications

1. Crampon destiné à être ancré dans un trou à crampon d'une bande de roulement d'un pneumatique de véhicule, comprenant un corps de crampon (1) configuré à symétrie de révolution et retenu dans le trou à crampon et une pointe de crampon (5) insérée et ancrée dans le corps de crampon (1), le corps de crampon (1) étant composé d'une bride supérieure (2), d'une bride de base (3) et d'un rétrécissement (4) se trouvant entre la bride supérieure (2) et la bride de base (3) et qui est globalement entouré et délimité par une surface extérieure à courbure concave (4a),
**caractérisé en ce que** le rétrécissement (4) présente une hauteur (H_{E}) qui représente de 23 % à 35 % de la hauteur (H) du corps de crampon (1), et présente en son centre son plus petit diamètre extérieur (D_{E}) qui mesure de 3,0 mm à 4,2 mm.

2. Crampon selon la revendication 1, **caractérisé en ce que** le diamètre extérieur (D_{E}) du rétrécissement (4) mesure en son centre jusqu'à 4,0 mm, en particulier de 3,2 mm à 3,8 mm.

3. Crampon selon la revendication 1, **caractérisé en ce que** la hauteur (H_{E}) du rétrécissement représente au moins 25 % et de préférence au moins 27 % de la hauteur (H) du corps de crampon (1).

4. Crampon selon l'une quelconque des revendications 1 à 3, **caractérisé en ce que** la surface extérieure à courbure concave du rétrécissement (4) décrit au moins en grande partie un arc de cercle ayant un rayon constant (R) de 1,0 mm à 1,7 mm, l'arc de cercle étant au maximum un demi-cercle.

5. Crampon selon l'une quelconque des revendications 1 à 4, **caractérisé en ce que** la bride de base (3) présente un diamètre extérieur (D_{F}) qui correspond au moins au diamètre extérieur (Dₒ) de la bride supérieure (2) et est de jusqu'à 2,2 mm plus grand que le diamètre extérieur (Dₒ) de la bride supérieure (2) .

6. Crampon selon l'une quelconque des revendications 1 à 5, **caractérisé en ce que** la bride supérieure (2) présente à son extrémité inférieure un élargissement (2a) périphérique en forme d'anneau de cercle qui présente une épaisseur constante de 0,25 mm à 0,5 mm et de préférence un diamètre extérieur qui est en particulier de 0,4 mm à 0,6 mm plus grand que le diamètre extérieur (Dₒ) de la bride supérieure (2).

7. Crampon selon l'une quelconque des revendications 1 à 6, **caractérisé en ce que** le rétrécissement (4) est décalé vers l'intérieur par rapport à la bride supérieure (2) et/ou à la bride de base (3).

8. Crampon selon la revendication 7, **caractérisé en ce que** le décalage (a, a') du rétrécissement (4) par rapport à la bride supérieure (2) et/ou à la bride de base (3) mesure de 0,1 mm à 0,4 mm.

9. Pneumatique de véhicule comprenant une bande de roulement, **caractérisé en ce que** dans la bande de roulement sont insérés des crampons qui sont configurés selon une ou plusieurs des revendications 1 à 8.
